(19) **Europäisches Patentamt**
**European Patent Office**
**Office européen des brevets**

(11) **EP 4 717 353 A1**

(12) **EUROPEAN PATENT APPLICATION**
published in accordance with Art. 153(4) EPC

(43) Date of publication:
01.04.2026 Bulletin 2026/14

(21) Application number: 24840147.3

(22) Date of filing: 15.07.2024

(51) International Patent Classification (IPC):
*B01J 21/18* (2006.01)        *B01J 23/50* (2006.01)
*B01J 35/40* (2024.01)        *B01J 37/04* (2006.01)
*C25B 1/01* (2021.01)          *C25B 11/081* (2021.01)
*H01M 4/96* (2006.01)         *H01M 4/90* (2006.01)
*H01M 8/1004* (2016.01)      *H01M 8/10* (2016.01)

(52) Cooperative Patent Classification (CPC):
Y02E 60/50

(86) International application number:
PCT/KR2024/010124

(87) International publication number:
WO 2025/014337 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.07.2023  KR 20230091260

(71) Applicant: LG Chem, Ltd.
Seoul 07336 (KR)

(72) Inventors:
• KIM, Tae Keun
  Daejeon 34122 (KR)
• AHN, In Kyoung
  Daejeon 34122 (KR)
• NOH, Tae Geun
  Daejeon 34122 (KR)

(74) Representative: Hoffmann Eitle
Patent- und Rechtsanwälte PartmbB
Arabellastraße 30
81925 München (DE)

(54) **ELECTRODE CATALYST, CATHODE, AND ELECTROCHEMICAL CELL**

(57)  The present invention relates to an electrode catalyst including carbon black, and more particularly, to an electrode catalyst having sufficient pores in the electrode catalyst by adjusting the specific surface area and content of the carbon black, and having improved hydrophobicity, and a cathode and an electrochemical cell including the same.

EP 4 717 353 A1

**Description**

## TECHNICAL FIELD

### Cross-reference to Related Applications

This application claims the benefit of Korean Patent Application No. 10-2023-0091260, filed on July 13, 2023, in the Korean Intellectual Property Office, the disclosure of which is incorporated herein in its entirety by reference.

### Technical Field

The present invention relates to an electrode catalyst, and a cathode and an electrochemical cell including the same.

## BACKGROUND ART

Carbon dioxide is a greenhouse gas that causes global warming, and thus, should be reduced. As a method for reducing carbon dioxide, methods such as capture, chemical conversion, or electrochemical conversion are known. Among the above-described methods, the electrochemical conversion method allows for a precise control of components so as to produce other synthetic gases, and is thus more economically beneficial than simply removing carbon dioxide. In addition, carbon dioxide may be electrolyzed together with water to obtain carbon monoxide, ethylene, methane, formic acid, formate, various hydrocarbons, and an organic substance such as an aldehyde or an alcohol.

A process of electrochemically decomposing and converting carbon dioxide using an electrochemical cell is as follows. When a current is applied while supplying water to an anode, the water is decomposed into a hydrogen ion and an electron together with the generation of oxygen gas. The electron is transferred to a cathode through an external conductive line, and the hydrogen ion is transferred to the cathode through an ion-selective separation membrane. Carbon dioxide and water vapor supplied to the cathode react together with the transferred electron to be decomposed into carbon monoxide and a hydroxide ion ($OH^-$), and the generated hydroxide ion reacts with a hydrogen ion ($H^+$) of an anode to produce water, thereby being in an electrical neutral state. Through the above process, an electrochemical decomposition reaction of carbon dioxide is completed.

Meanwhile, in order to commercialize the above-described electrochemical conversion technology of carbon dioxide, a high current is required to flow into a target product, and accordingly, a voltage applied to the electrode also increases. However, if a high voltage is applied to a cathode, a strong reduction atmosphere is formed in the cathode by overvoltage, which can intensify an electro wetting effect, and the hydrophobicity of the cathode is reduced, which may allow the cathode to be submerged by water. A phenomenon in which the submerge of the cathode interferes with the diffusion of a gas into the electrode, thereby decreasing the performance of the electrode is referred to as a flooding phenomenon, and specifically, the flooding phenomenon promotes a hydrogen evolution reaction (HER), and thus, not only significantly decreases a Faraday efficiency for carbon monoxide production, but also degrades the long-term stability of an electrode catalyst. Therefore, there is a need for the development of an electrode catalyst capable of maintaining the performance of an electrochemical carbon dioxide conversion reaction for a long period of time.

### DISCLOSURE OF THE INVENTION

### TECHNICAL PROBLEM

The present invention has been devised to solve the above-described existing problem, and has an object to secure long-term stability in electrolyzing carbon dioxide with a high current by using an electrochemical cell.

That is, in an electrode catalyst including carbon black, the specific surface area and content of the carbon black are adjusted by the present invention to sufficiently form pores in the electrode catalyst, thereby allowing carbon dioxide to smoothly flow into an electrode catalyst layer including the electrode catalyst, resulting in reducing the overvoltage of an electrode at a high current. In addition, the hydrophobicity of the electrode catalyst is increased by means of the carbon black, so that it is also possible to prevent degradation in the efficiency of the electrode caused by a flooding phenomenon at a high current.

In addition, another object of the present invention is to provide a cathode and an electrochemical cell including the electrode catalyst.

## TECHNICAL SOLUTION

In order to achieve the above-described objects, the present invention provides an electrode catalyst, and a cathode and an electrochemical cell including the same.

(1) The present invention provides an electrode catalyst including metal nanoparticles, and carbon black, wherein the carbon black has a specific surface area of 100 $m^2$/g to 750 $m^2$/g, and the carbon black has a content of 35 parts by weight to 350 parts by weight based on 100 parts by weight of the metal nanoparticles.

(2) In (1) above, the present invention provides an electrode catalyst, wherein the carbon black has a specific resistance of 1.5 $\Omega \cdot$cm or less.

(3) In (1) or (2) above, the present invention provides an electrode catalyst, wherein the metal nanoparticles have an average diameter of 100 nm or less.

(4) In (1) to (3) above, the present invention provides an electrode catalyst, wherein the metal nanoparticles include one or more elements selected from the group consisting of Ag, Au, Zn, In, Cu, Ni, Pt, Pd, Ti, Fe, Ga, and Sn.

(5) In any one of (1) to (4) above, the present invention provides an electrode catalyst, wherein the electrode catalyst includes a cationic ionomer or an anionic ionomer.

(6) In any one of (1) to (5) above, the present invention provides an electrode catalyst, wherein the cationic ionomer or the anionic ionomer has a content of 0.1 parts by weight to 20 parts by weight based on 100 parts by weight of the metal nanoparticles.

(7) The present invention provides a cathode including an electrode catalyst layer, and a gas diffusion layer, wherein the electrode catalyst layer includes any one of the electrode catalysts of (1) to (6) above, and the electrode catalyst layer is stacked on at least one surface of the gas diffusion layer.

(8) In (7) above, the present invention provides a cathode, wherein the content per unit area of the metal nanoparticles in the electrode catalyst layer is 0.5 mg/cm$^2$ to 1.5 mg/cm$^2$.

(9) The present invention provides a method for preparing a cathode, the method including (S1) preparing an electrode catalyst composition by mixing metal nanoparticles, carbon black, and a solvent, and (S2) coating the electrode catalyst composition prepared in the step (S1) on a gas diffusion layer, wherein in the step (S1), the carbon black has a specific surface area of 100 $m^2$/g to 750 $m^2$/g, and in the step (S1), the content of the carbon black is 35 parts by weight to 350 parts by weight based on 100 parts by weight of the metal nanoparticles.

(10) The present invention provides an electrochemical cell including the cathode of (7) or (8) above, an anode, and a separator disposed between the cathode and the anode.

## ADVANTAGEOUS EFFECTS

If an electrode catalyst of the present invention is applied to a cathode and an electrochemical cell, due to sufficient pores formed in the electrode catalyst and high hydrophobicity, overvoltage of the cathode is decreased and a flooding phenomenon is mitigated at a high current, and accordingly, it is possible to provide an electrochemical cell capable of maintaining low overvoltage and high carbon monoxide Faraday efficiency for a long period of time.

## MODE FOR CARRYING OUT THE INVENTION

Hereinafter, the present invention will be described in more detail to facilitate understanding of the present invention.

It will be understood that words or terms used herein shall not be interpreted as having the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used herein are only used to describe preferred embodiments, and are not intended to limit the present invention. Singular expressions include plural expressions unless the context clearly indicates otherwise.

In the present specification, it should be understood that the term "include," "comprise," or "have" is intended to specify the presence of stated features, numbers, steps, elements, or combinations thereof, but do not preclude the presence or addition of one or more other features, numbers, steps, elements, or combinations thereof.

In the present specification, a "content per unit area" is measured by dividing a difference in weight between a substrate coated with an electrode catalyst on one surface and a substrate before the electrode catalyst coating by the area of the one surface.

In the present specification, an "average diameter" is measured in a light scattering manner using a particle size analyzer.

In the present specification, an "electrode catalyst" refers to a catalyst of an electrochemical reaction, which is applied to an electrochemical device of such as carbon dioxide electrolysis and water electrolysis, or a fuel cell to function as a catalyst for an oxidation reaction or a reduction reaction. The electrode catalyst may include an additive such as a binder in addition to metal nanoparticles, and may include both a solution form obtained by dispersing the metal nanoparticles in a solvent and a powder form obtained after the solvent is evaporated.

In the present specification, a "cathode" refers to an electrode in which a reduction reaction of a reactant occurs in an electrochemical device of such as carbon dioxide electrolysis and water electrolysis, or a fuel cell, and may include an electrode catalyst layer.

In the present specification, an "electrochemical cell" refers to a device including a cathode, an anode, and a separator disposed between the cathode and the anode. The electrochemical cell may be applied to an electrochemical conversion device capable of producing useful chemicals through electrochemical conversion, such as an electrochemical device of carbon dioxide electrolysis and water electrolysis, a fuel cell, or the like.

## Electrode catalyst

The present invention provides an electrode catalyst.

According to an embodiment of the present invention, the electrode catalyst includes metal nanoparticles and carbon black, wherein the carbon black may have a specific surface area of $100 \, m^2/g$ to $750 \, m^2/g$, and the carbon black may have a content of 35 parts by weight to 350 parts by weight based on 100 parts by weight of the metal nanoparticles.

The electrode catalyst of the present invention is characterized by including carbon black in order to overcome the problem of degradation in the performance of an electrode caused by a flooding phenomenon which occurs when an electrochemical cell is driven with a high current and a hydrogen generation reaction caused by overvoltage. The electrode catalyst may include both a solution form obtained by dispersing the metal nanoparticles in a solvent and a powder form obtained after the solvent is evaporated, and the electrode catalyst in the solution form may be applied to a substrate such as a gas diffusion layer or a separator and then dried to form an electrode catalyst layer. However, a typical electrode catalyst composed of metal nanoparticles and a binder is present in a state in which the metal particles are aggregated by attraction between metal particles, so that there are insufficient pores through which carbon dioxide may move between the aggregated metal particles. As a result, an electrode catalyst layer including the typical electrode catalyst has a problem in that a carbon dioxide gas is not allowed to smoothly flow into the surface of the metal particles, resulting in increasing overvoltage at a high current. In addition, the typical electrode catalyst also has a problem of low dispersibility of the electrode catalyst due to an aggregation phenomenon caused by the attraction between the metal nanoparticles in the electrode catalyst. Therefore, if a cathode is manufactured by coating the electrode catalyst on one surface of a gas diffusion layer, an electrode catalyst layer is not uniformly stacked on one surface of the gas diffusion layer, and there is a problem in that the gas diffusion layer in which the electrode catalyst layer is not sufficiently coated thereon is easily submerged at a high current, thereby deteriorating the performance of the electrode. Therefore, in order to solve the above-described problems, the electrode catalyst of the present invention is characterized by including metal nanoparticles together with carbon black having a specific surface area of $100 \, m^2/g$ to $750 \, m^2/g$ or less, wherein the carbon black is included in an amount of 35 parts by weight to 350 parts by weight based on 100 parts by weight of the metal nanoparticles. Specifically, in the electrode catalyst, the metal nanoparticles are present in a form of being mixed between the carbon black, and unlike the form of a supported catalyst in which metal nanoparticles are attached onto the surface of a typical carbon black support, the metal nanoparticles and the carbon black are not attached to each other in the electrode catalyst of the present invention. The carbon black may form sufficient pores in the electrode catalyst to facilitate the inflow of carbon dioxide in an electrode catalyst layer including the electrode catalyst, and as a result, overvoltage may be lowered at a high current. In addition, carbon particles of the carbon black in the electrode catalyst may interact with the metal nanoparticles, and thus, may mitigate an aggregation phenomenon occurring due to attraction between the metal nanoparticles, and as a result, may also improve the dispersibility of the electrode catalyst. Therefore, the electrode catalyst with improved dispersibility may be uniformly coated on one surface of a gas diffusion layer and then dried to be uniformly stacked on one surface of the gas diffusion layer in the form of an electrode catalyst layer, and accordingly, may prevent the gas diffusion layer from being submerged. In addition, the carbon particles of the carbon black are hydrophobic, so that in a cathode including the electrode catalyst, a flooding phenomenon caused by the submerge may be mitigated.

Meanwhile, the carbon black may have a specific surface area of $100 \, m^2/g$ to $750 \, m^2/g$, and specifically, the carbon black may have a specific surface area of $100 \, m^2/g$ or greater, $125 \, m^2/g$ or greater, $150 \, m^2/g$ or greater, $175 \, m^2/g$ or greater, $200 \, m^2/g$ or greater, $225 \, m^2/g$ or greater, or $250 \, m^2/g$ or greater, and also, $750 \, m^2/g$ or less, $725 \, m^2/g$ or less, $700 \, m^2/g$ or less, $675 \, m^2/g$ or less, $650 \, m^2/g$ or less, $625 \, m^2/g$ or less, $600 \, m^2/g$ or less, $575 \, m^2/g$ or less, $550 \, m^2/g$ or less, $525 \, m^2/g$ or less, $500 \, m^2/g$ or less, $475 \, m^2/g$ or less, $450 \, m^2/g$ or less, $425 \, m^2/g$ or less, $400 \, m^2/g$ or less, $375 \, m^2/g$ or less, $350 \, m^2/g$ or less, $325 \, m^2/g$ or less, $300 \, m^2/g$ or less, $275 \, m^2/g$ or less, or $250 \, m^2/g$ or less. If the specific surface area of the carbon black satisfies the above-described ranges, the carbon particles of the carbon black may sufficiently interact with the metal nanoparticles in the electrode catalyst, so that the dispersibility of the electrode catalyst may be improved. On the other hand, if the specific surface area of the carbon black is higher than the above-described ranges, the density of an electrode catalyst layer including the electrode catalyst may be lowered due to the high specific surface area of the carbon black, which may increase the resistance of an electrode, and as a result, there may be a problem in that overvoltage significantly increases when driving an electrochemical cell. In addition, as the specific surface area increases, aggregation between the carbon particles of the carbon black rather increases, so that the dispersibility of the electrode catalyst may also be degraded. If the specific surface area is smaller than the above-described ranges, the density of an electrode catalyst layer including the electrode catalyst increases, resulting in decreasing pores in the electrode catalyst layer, and as a result, the inflow of carbon dioxide is not facilitated, which may cause a problem in which overvoltage significantly increases when driving an electrochemical cell, and the carbon dioxide conversion rate is lowered.

Meanwhile, based on 100 parts by weight of the metal nanoparticles, the content of the carbon black may be 35 parts by weight to 350 parts by weight, and specifically, based on 100 parts by weight of the metal nanoparticles, the content of the carbon black may be 35 parts by weight or greater, 45 parts by weight or greater, 50 parts by weight or greater, 55 parts by weight or greater, 65 parts by weight or greater, 75 parts by weight or greater, 85 parts by weight or greater, or 95 parts by weight or greater, and also, 350 parts by weight or less, 340 parts by weight or less, 330 parts by weight or less, 320 parts by weight or less, 310 parts by weight or less, 300 parts by weight or less, 290 parts by weight or less, 280 parts by weight or less, 270 parts by weight or less, 260 parts by weight or less, 250 parts by weight or less, 240 parts by weight or less, 230 parts by weight or less, 220 parts by weight or less, 210 parts by weight or less, 200 parts by weight or less, 190 parts by weight or less, 180 parts by weight or less, 170 parts by weight or less, 160 parts by weight or less, 150 parts by weight or less, 140 parts by weight or less, 130 parts by weight or less, 120 parts by weight or less, 110 parts by weight or less, or 100 parts by weight or less. If the content of carbon black in the electrode catalyst satisfies the above-described ranges, sufficient pores are formed in an electrode catalyst layer including the electrode catalyst, which may facilitate the inflow of carbon dioxide, and as a result, carbon dioxide conversion performance may be improved. In addition, carbon particles of the carbon black may sufficiently interact with the metal nanoparticles in the electrode catalyst, so that the dispersibility of the electrode catalyst may be improved, and the hydrophobicity of the electrode catalyst may also increase, which may mitigate degradation in the performance of an electrode caused by a flooding phenomenon. On the other hand, if the content of the carbon black is higher than the above-described ranges, the content per unit area of the metal nanoparticles which function as a catalyst in a carbon dioxide reduction reaction is relatively lowered, so that the carbon dioxide reduction reaction is reduced in a cathode including the electrode catalyst, and as a result, there may be a problem in that the conversion rate of carbon dioxide is lowered. If the content of the carbon black is lower than the above-described ranges, the interaction between the carbon black and the metal nanoparticles described above may not sufficiently occur in the electrode catalyst, which may lower the dispersibility of the electrode catalyst, and the hydrophobicity of the electrode catalyst may also be lowered, so that there may be a problem of degradation in the performance of an electrode caused by the flooding phenomenon.

According to an embodiment of the present invention, the carbon black may have a specific resistance of 1.5 $\Omega \cdot$cm or less, and specifically, the carbon black may have a specific resistance of 1.5 $\Omega \cdot$cm or less, 1.4 $\Omega \cdot$cm or less, 1.3 $\Omega \cdot$cm or less, 1.2 $\Omega \cdot$cm or less, 1.1 $\Omega \cdot$cm or less, 1.0 $\Omega \cdot$cm or less, or 0.9 $\Omega \cdot$cm or less, and also, 0.1 $\Omega \cdot$cm or greater, 0.2 $\Omega \cdot$cm or greater, 0.3 $\Omega \cdot$cm or greater, 0.4 $\Omega \cdot$cm or greater, or 0.5 $\Omega \cdot$cm or greater. If the specific resistance of the carbon black satisfies the above-described ranges, the resistance of a cathode including the electrode catalyst decreases due to a low specific resistance of the carbon black, so that the cathode having excellent electrical conductivity and maintaining low overvoltage even at a high current may be obtained.

According to an embodiment of the present invention, the metal nanoparticles may have an average diameter of 100 nm or less, and specifically, the metal nanoparticles may have an average diameter of 100 nm or less, 90 nm or less, or 80 nm or less, and also, 5 nm or greater, 10 nm or greater, 20 nm or greater, or 30 nm or greater. If the average diameter of the metal nanoparticles satisfies the above-described ranges, the carbon dioxide reduction reaction may be further promoted in a cathode including the electrode catalyst due to a high specific surface area of the metal nanoparticles, and as a result, the conversion rate of carbon dioxide may increase.

According to an embodiment of the present invention, the metal nanoparticles may be metal nanoparticles including one or more elements selected from the group consisting of Ag, Au, Zn, In, Cu, Ni, Pt, Pd, Ti, Fe, Ga, and Sn. Specifically, the metal nanoparticles may be silver nanoparticles including an Ag element, and the silver nanoparticles may be included in a catalyst layer of a cathode to act as a catalyst for a reduction reaction so as to lower the activation energy of a carbon dioxide reduction reaction. The metal elements listed above may be included in the metal nanoparticles, and like the silver nanoparticles, may serve as a catalyst of a carbon dioxide reduction reaction in a cathode.

According to an embodiment of the present invention, the electrode catalyst may include a cationic ionomer or an anionic ionomer. The cation ionomer is an ion-conductive polymer including cations, and anions such as hydroxide ions $(OH^-)$ may move through the cations, and the anion ionomer is an ion-conductive polymer including anions, and cations such as hydrogen ions $(H^+)$ may move through the anions. Specifically, Nafion manufactured by DuPont, or the like may be applied as the anionic ionomer. The cationic ionomer or the anionic ionomer may be added to and mixed with an electrode catalyst in a solution form including a solvent, metal nanoparticles, and carbon black, and the metal nanoparticles and carbon particles of the carbon black may be more strongly bonded to a gas diffusion layer by means of the cationic ionomer or the anionic ionomer, and thus, may prevent a deintercalation phenomenon, and ions moved to an electrode catalyst layer through an electrolyte solution may more smoothly move in the electrode catalyst layer, so that the interfacial resistance of the electrode catalyst may be reduced, thereby further promoting a carbon dioxide reduction reaction.

According to an embodiment of the present invention, the content of the cationic ionomer or the anionic ionomer may be 0.1 parts by weight to 20 parts by weight based on 100 parts by weight of the metal nanoparticles, and specifically, the content of the ionomer may be 0.1 parts by weight or greater, 1 part by weight or greater, 2 parts by weight or greater, 3 parts by weight or more, 4 parts by weight or greater, 5 parts by weight or greater, 6 parts by weight or greater, 7 parts by weight or greater, 8 parts by weight or greater, 9 parts by weight or greater, or 10 parts by weight or greater, and also, 20 parts by weight or less, 19 parts by weight or less, 18 parts by weight or less, 17 parts by weight or less, 16 parts by weight or less, 15 parts by weight or less, 14 parts by weight or less, 13 parts by weight or less, 12 parts by weight or less, 11 parts by weight or less, or 10 parts by weight or less. If the content of the ionomer satisfies the above-described ranges, adhesion force between the electrode catalyst and the gas diffusion layer increases, which may reduce the interfacial resistance of a cathode generated by deintercalation of an electrode catalyst layer. On the other hand, if the content of the ionomer is too high, the ionomer may cover the metal nanoparticles in the electrode catalyst layer, so that carbon dioxide conversion performance may be degraded.

**Cathode**

The present invention provides a cathode including the above-described electrode catalyst.

According to an embodiment of the present invention, the cathode may include an electrode catalyst layer and a gas diffusion layer, wherein the electrode catalyst layer may include the electrode catalyst, and the electrode catalyst layer may be stacked on at least one surface of the gas diffusion layer. The cathode of the present invention has a form in which an electrode catalyst layer is stacked on one surface of a gas diffusion layer, and particularly, the electrode catalyst layer may include the electrode catalyst of the present invention described above.

Meanwhile, the gas diffusion layer serves to diffuse carbon dioxide into the electrode catalyst layer. The gas diffusion layer may use a porous body using a carbon material such as carbon fiber cloth, carbon fiber felt, or carbon fiber paper, or a metal porous body made of a thin metal plate having a mesh structure such as an expanded metal, a metal mesh, and the like, and specifically, Sigracet 39BB manufactured by SGL Caron, JNT30-A6P manufactured by JNTG, or the like may be used as the gas diffusion layer to diffuse carbon dioxide supplied to the cathode into the electrode catalyst layer.

The cathode may have a form in which the electrode catalyst in a solution form is applied to any one surface of the gas diffusion layer and then dried to be stacked on one surface of the gas diffusion layer in the form of an electrode catalyst layer, and a carbon dioxide reduction reaction may be performed in the electrode catalyst layer.

According to an embodiment of the present invention, the electrode catalyst layer may have a thickness of 0.1 $\mu$m to 100 $\mu$m. The thickness of the electrode catalyst layer may vary depending on the content of the metal nanoparticles and the carbon black, the specific surface area of the carbon black, and the coating amount of the electrode catalyst, and if the thickness of the electrode catalyst layer is the same as the above-described ranges, the mechanical strength of the electrode catalyst layer may be high and an increase in resistance by the catalyst layer may be low.

According to an embodiment of the present invention, the content per unit area of the metal nanoparticles in the electrode catalyst layer may be 0.5 $mg/cm^2$ to 1.5 $mg/cm^2$, and specifically, the content per unit area of the metal nanoparticles may be 0.5 $mg/cm^2$ or greater, 0.6 $mg/cm^2$ or greater, 0.7 $mg/cm^2$ or greater, 0.8 $mg/cm^2$ or greater, or 0.9 $mg/cm^2$, or 1.0 $mg/cm^2$ or greater, and also, 1.5 $mg/cm^2$ or less, 1.4 $mg/cm^2$ or less, 1.3 $mg/cm^2$ or less, 1.2 $mg/cm^2$ or less, 1.1 $mg/cm^2$ or less, or 1.0 $mg/cm^2$ or less.

If the content per unit area of the metal nanoparticles in the electrode catalyst layer satisfies the above-described ranges, the conversion rate of carbon dioxide of the cathode including the electrode catalyst layer may be improved, and low overvoltage may be maintained even at a high current. In addition, compared to the cost of metal nanoparticles introduced in the above-described ranges, the degree of improvement in the conversion rate of carbon dioxide is high, which make it economical.

**Cathode preparation method**

The present invention provides a method for preparing a cathode.

According to an embodiment of the present invention, the method for preparing a cathode includes (S1) preparing an electrode catalyst composition by mixing metal nanoparticles, carbon black, and a solvent, and (S2) coating the electrode catalyst composition prepared in the step (S1) on a gas diffusion layer, wherein the carbon black mixed in the step (S1) may have a specific surface area of 100 $m^2/g$ to 750 $m^2/g$, and the content of the carbon black mixed in the step (S1) may be 35 parts by weight to 350 parts by weight based on 100 parts by weight of the metal nanoparticles.

Specifically, the step (S1) is a step of mixing metal nanoparticles, a solvent, and carbon black, and then stirring and dispersing the mixture to prepare an electrode catalyst composition, wherein the electrode catalyst composition refers to the above-described electrode catalyst in a solution form. In addition, the step (S1) may be performed by further adding the cation ionomer or anion ionomer described above when preparing the electrode catalyst composition.

In the case of a typical method for preparing an electrode catalyst composition by using carbon black and metal nanoparticles, metal nanoparticles are supported on a carbon black support to prepare supported catalyst particles, and then the catalyst particles and a solvent are mixed to prepare an electrode catalyst composition, and as a result, the electrode catalyst composition in a form in which the metal nanoparticles are attached to the surface of the carbon black support is prepared. However, the cathode to which the supported catalyst is applied has a problem in that overvoltage is high at a high current and a hydrogen production reaction is high. On the contrary, the present invention is characterized in that carbon black is mixed together with metal nanoparticles and a solvent to prepare an electrode catalyst composition. Therefore, in the electrode catalyst composition, the metal nanoparticles are present in a form of being mixed between the carbon black, and unlike a typical supported catalyst, an electrode catalyst composition in which metal nanoparticles and carbon black are not attached to each other may be prepared.

In addition, the step (S1) may be a step in which a solvent and metal nanoparticles are mixed, and then carbon black having a specific surface area of $100 \, m^2/g$ to $750 \, m^2/g$ is added thereto in an amount of 35 parts by weight to 350 parts by weight based on 100 parts by weight of the metal nanoparticles and mixed to prepare an electrode catalyst composition. As described above, in the electrode catalyst layer of the cathode coated with the electrode catalyst composition by the carbon black, the inflow of carbon dioxide may be facilitated, and as a result, the cathode may have low overvoltage at a high current, and may have a high carbon dioxide conversion rate. In addition, the dispersibility of the electrode catalyst composition may be improved so that the electrode catalyst composition may be uniformly coated on one surface of the gas diffusion layer, and the hydrophobicity of the electrode catalyst composition may also increase due to the carbon black, so that in a cathode coated with the electrode catalyst composition, the flooding phenomenon caused by submerge may be mitigated.

The step (S2) is a step of coating the electrode catalyst composition on one surface of a gas diffusion layer, and specifically, may be a step of coating the electrode catalyst composition on one surface of the gas diffusion layer, followed by drying the same to remove the solvent in the electrode catalyst composition, and allowing an electrode catalyst layer to be uniformly staked on one surface of the gas diffusion layer. Meanwhile, the coating may be performed by any one method selected from the group consisting of doctor blade, die casting, comma coating, screen printing, spray coating, electrospinning, roll coating, and brushing, and specifically, may be a step of performing coating by spray-coating the catalyst composition on one surface of the gas diffusion layer, followed by drying the same to remove the solvent in the catalyst composition, and allowing an electrode catalyst layer to be staked to a thickness of $0.1 \, \mu m$ to $100 \, \mu m$ on one surface of the gas diffusion layer.

In the step (S2) may be coating the electrode catalyst composition such that the content per unit area of the metal nanoparticles in any one surface of the gas diffusion layer satisfies $0.5 \, mg/cm^2$ to $1.5 \, mg/cm^2$. If the electrode catalyst composition is coated such that the content per unit area of the metal nanoparticles in any one surface of the gas diffusion layer satisfies the above-described ranges, it is possible to manufacture a cathode having an excellent carbon dioxide conversion rate, and also maintaining low overvoltage even when a high current is applied thereto. In addition, compared to the cost of metal nanoparticles introduced in the above-described ranges, the degree of improvement in the conversion rate of carbon dioxide is high, which make it economical.


**Electrochemical cell**

The present invention provides an electrochemical cell including the cathode.

According to an embodiment of the present invention, the electrochemical cell may include the cathode, an anode, and a separator disposed between the cathode and the anode.

According to an embodiment of the present invention, the electrochemical cell may be a cell for electrolyzing carbon dioxide and water vapor, thereby converting the carbon dioxide and the water vapor into carbon monoxide and hydroxide ions, and the electrochemical cell may be utilized in all electrochemical conversion devices capable of producing useful chemicals through electrochemical conversion, such as a fuel cell and a water electrolysis device, in addition to an electrolysis device of carbon dioxide. Meanwhile, the electrolysis refers to decomposing a material through a redox reaction by applying a direct-current voltage instead of a decomposition reaction which does not spontaneously occur, and the electrolysis of carbon dioxide through the electrochemical cell of the present invention is performed through the following process.

The anode of the electrochemical cell of the present invention is an oxidation electrode which oxidizes water, thereby generating oxygen, and hydrogen ions are generated at this time. The hydrogen ions generated in the anode may be transferred to the cathode through the separator, and the cathode is a reduction electrode in which carbon dioxide and water vapor introduced into the cathode may react with electrons transferred from the anode and produce carbon monoxide and hydrogen.

The anode and the cathode of the electrochemical cell of the present invention may each include an electrode catalyst layer. The electrode catalyst layer of the cathode may include an electrode catalyst having activity in a carbon dioxide reduction reaction, and particularly, a carbon dioxide reduction reaction occurring in the cathode is competing with a hydrogen generation reaction, so that an electrode catalyst having activity in the carbon dioxide reduction reaction, and at the same time, having a high voltage required for the hydrogen generation reaction may be included. Specifically, the electrode catalyst may be the electrode catalyst of the present invention.

Meanwhile, the electrode catalyst layer of the anode may include an electrode catalyst having activity in an oxidation reaction of water, and the electrode catalyst of the anode may include one or more selected from the group consisting of Pt, Au, Pd, Ir, Ag, Rh, Ru, Ni, Al, Mo, Cr, Cu, Ti, W, Ta, an alloy thereof, or a mixed metal oxide, e.g., $Ta_2O_5$, $IrO_2$, or the like, and specifically, the anode may be a titanium mesh substrate coated with iridium oxide ($IrO_2$).

Meanwhile, the cathode may include a gas diffusion layer to uniformly supply humidified carbon dioxide to the electrode catalyst layer, and specifically, the gas diffusion layer may be the gas diffusion layer described above, and an electrode catalyst layer may be stacked on one surface of the gas diffusion layer. If the cathode includes the gas diffusion layer, the supplied carbon dioxide may be smoothly diffused, distributed, and supplied to the electrode catalyst layer of the cathode, and the gas diffusion layer effectively prevents moisture condensation, thereby allowing the supply of carbon dioxide to the electrode catalyst layer to be continuously uniform, and at the same time, allowing an electrolysis reaction to be smoothly performed.

Meanwhile, the separator may be disposed between the anode and the cathode. The separator itself may be composed of an inert material that does not participate in an electrochemical reaction, but provides a path for allowing an ion to be transferred between the anode and the cathode, and may serve to separate a physical contact of the anode and the cathode. Specifically, a porous separator may be used as the separator.

According to an embodiment of the present invention, the electrochemical cell may be utilized in all electrochemical conversion devices, and the electrochemical cell may be utilized in a device for electrolyzing carbon dioxide, thereby producing one or more selected from the group consisting of carbon monoxide, ethylene, methane, formic acid, hydrocarbon, aldehyde, and alcohol. Specifically, the electrochemical cell may electrolyze carbon dioxide, thereby producing carbon monoxide.

Since the electrochemical cell of the present invention includes the cathode of the present invention described above, an electrode catalyst layer of the cathode includes metal nanoparticles and carbon black which has a specific surface area of 100 $m^2/g$ to 750 $m^2/g$, wherein the carbon black may have a content of 35 parts by weight to 350 parts by weight based on 100 parts by weight of the metal nanoparticles. Therefore, as described above, the electrochemical cell of the present invention includes the cathode having an electrode catalyst layer in which pores are sufficiently formed, so that the inflow of carbon dioxide may be facilitated, and as a result, the conversion rate of carbon dioxide may be high, and overvoltage at a high current may be low.

Hereinafter, the present invention will be described in more detail with reference to examples and experimental examples, but the present invention is not limited by these examples and experimental examples. The examples according to the present invention may be modified into other various forms, and the scope of the present invention should not be construed as being limited to the examples described below. The examples of the present invention are provided to more fully describe the present invention to those skilled in the art.

**Examples and Comparative Examples**

**Example 1**

1,000 mg of silver nanoparticles (Ag NP) was mixed with 100 mL of a solvent, in which isopropanol and water were mixed at a volume ratio of 9 : 1, to prepare a solution having a concentration of silver nanoparticles of 10 mg/mL. Subsequently, 1,000 mg of Vulcan XC-72 having a specific surface area of 250 $m^2/g$ and a specific resistance of 0.2 $\Omega \cdot cm$ to 1.0 $\Omega \cdot cm$ was added thereto, and 100 mg of Nafion (DuPont) was added thereto. Thereafter, the mixture was stirred using a homogenizer, and dispersed using an ultrasonicator to prepare an electrode catalyst. The Vulcan XC-72 content of the electrode catalyst is 100 parts by weight based on 100 parts by weight of the silver nanoparticles.

**Example 2**

An electrode catalyst was prepared in the same manner as in Example 1, except that 500 mg of the Vulcan XC-72 was added. The Vulcan XC-72 content of the electrode catalyst is 50 parts by weight based on 100 parts by weight of the silver nanoparticles.

**Example 3**

An electrode catalyst was prepared in the same manner as in Example 1, except that 3,000 mg of the Vulcan XC-72 was added. The Vulcan XC-72 content of the electrode catalyst is 300 parts by weight based on 100 parts by weight of the silver nanoparticles.

**Example 4**

An electrode catalyst was prepared in the same manner as in Example 1, except that 350 mg of the Vulcan XC-72 was added. The Vulcan XC-72 content of the electrode catalyst is 35 parts by weight based on 100 parts by weight of the silver nanoparticles.

**Comparative Example 1**

An electrode catalyst was prepared in the same manner as in Example 1, except that Vulcan XC-72 was not added.

**Comparative Example 2**

An electrode catalyst was prepared in the same manner as in Example 1, except that 5 mg of Ketjenblack EC600JD having a specific surface area of 1,270 $m^2$/g and a specific resistance of 0.005 $\Omega\cdot$cm to 0.01 $\Omega\cdot$cm was added instead of Vulcan XC-72. The Ketjenblack EC600JD content of the electrode catalyst is 0.5 parts by weight based on 100 parts by weight of the silver nanoparticles.

**Comparative Example 3**

An electrode catalyst was prepared in the same manner as in Example 1, except that 1,000 mg of Ketjenblack EC600JD was added instead of Vulcan XC-72. The Ketjenblack EC600JD content of the electrode catalyst is 100 parts by weight based on 100 parts by weight of the silver nanoparticles.

**Comparative Example 4**

An electrode catalyst was prepared in the same manner as in Example 1, except that 1,000 mg of Ketjenblack EC300J having a specific surface area of 800 $m^2$/g and a specific resistance of 0.01 $\Omega\cdot$cm to 0.1 $\Omega\cdot$cm was added instead of Vulcan XC-72. The Ketjenblack EC300J content of the electrode catalyst is 100 parts by weight based on 100 parts by weight of the silver nanoparticles.

**Comparative Example 5**

An electrode catalyst was prepared in the same manner as in Example 1, except that 200 mg of the Vulcan XC-72 was added. The Vulcan XC-72 content of the electrode catalyst is 20 parts by weight based on 100 parts by weight of the silver nanoparticles.

**Comparative Example 6**

An electrode catalyst was prepared in the same manner as in Example 1, except that 4,000 mg of the Vulcan XC-72 was added. The Vulcan XC-72 content of the electrode catalyst is 400 parts by weight based on 100 parts by weight of the silver nanoparticles.

**Experimental Examples**

**(1) Manufacturing of electrochemical cell**

The electrode catalyst of each of Examples and Comparative Examples was coated on one surface of a gas diffusion layer (JNT30-A6P (JNTG Co.)) having an area of 25 $cm^2$ using an ultrasonic spray coater at 120 °C to prepare a cathode. At this time, the content per unit area of silver nanoparticles in an electrode catalyst layer stacked on one surface of the gas diffusion layer was all the same at 1.0 mg/$cm^2$, and the thickness of the electrode catalyst layer was 30 $\mu$m for Example 1, 15 $\mu$m for Example 2, and 90 $\mu$m for Example 3.

In addition, a Ti mesh sprayed with $IrO_2$ was used as an anode, and at this time, the area of the Ti mesh was 25 $cm^2$. 0.25 M of $Cs_2CO_3$ was used as an anode electrolyte. A porous separator was used as a separator, and the cathode and the anode were respectively stacked on both sides of the separator to complete an electrochemical cell.

## (2) Evaluation of electrochemical performance according to current density

A reaction was performed for 30 minutes using the electrochemical cell, a current density of 100, 200, 300, 400, and 500 $mA/cm^2$ was applied for 30 minutes each using a VSP potentiostat (BioLogic Co.), and a reaction voltage of 1 V to 4 V was applied to measure the carbon dioxide conversion rate, Faraday efficiency, and overvoltage for a product. The anode was supplied with an electrolyte solution at a rate of 25 mL/min, and the cathode was supplied with humidified carbon dioxide at 40°C at a rate of 200 ccm. The conversion rate of the carbon dioxide was calculated as a ratio of carbon monoxide produced with respect to the amount of a carbon dioxide gas introduced per hour, and the Faraday efficiency was measured by analyzing a gas composition at a discharge line by using gas chromatography (GC). In addition the Faraday efficiency was calculated through the following equation.

$$[\text{Equation 1}]$$

$$FE_{product}(\%) = \frac{i_{product}}{i_{total}} \times 100 = \frac{V_{product} \times Q \times \frac{2Fp}{RT}}{i_{total}} \times 100$$

In Equation 1 above, Q is a flow rate at a discharge line, F is a Faraday constant, p is a pressure, T is a measurement temperature, and R is an ideal gas constant. A total current $i_{total}$ is a value of the total current applied over time, and a current $i_{product}$ with respect to a product is a value calculated from a volume of gas $V_{product}$ measured through GC analysis. The conversion rate of the carbon dioxide according to each current density and the Faraday efficiency of each product are shown in Tables 1 to 3 below.

The measurement of the overvoltage was performed using a VSP Potentiostat (BioLogic Co.). An 80 A booster was mounted to apply a current corresponding to a large area. The current application was maintained at 100, 200, 300, 400, and 500 $mA/cm^2$ for a predetermined time, and then a voltage at the time when 15 minutes had elapsed was recorded. At this time, the gas-chromatography (GC) analysis was also simultaneously performed, and overvoltage values are shown in Tables 1 to 3.

[Table 1]

| Classification | Performance | Example 1 | Example 2 | Example 3 | Example 4 |
|---|---|---|---|---|---|
| 100 $mA/cm^2$ | $CO_2$ conversion rate (%) | 9.83 | 10.06 | 9.82 | 9.82 |
| | CO Faraday efficiency (%) | 101.67 | 100.50 | 102.09 | 102.13 |
| | $H_2$ Faraday efficiency (%) | 0.33 | 0.28 | 0.07 | 0.67 |
| | Overvoltage (V) | -2.691 | -2.673 | -2.828 | -2.857 |
| 200 $mA/cm^2$ | $CO_2$ conversion rate (%) | 18.95 | 18.93 | 18.24 | 18.71 |
| | CO Faraday efficiency (%) | 97.94 | 94.57 | 94.80 | 97.25 |
| | $H_2$ Faraday efficiency (%) | 0.24 | 0.39 | 0.18 | 0.45 |
| | | -2.965 | -2.935 | -3.033 | -3.070 |
| | Overvoltage (V) | | | | |
| 300 $mA/cm^2$ | $CO_2$ conversion rate (%) | 27.84 | 26.85 | 26.66 | 27.42 |
| | CO Faraday efficiency (%) | 95.92 | 89.44 | 92.39 | 95.03 |
| | $H_2$ Faraday efficiency (%) | 0.20 | 1.56 | 0.16 | 0.43 |
| | Overvoltage (V) | -3.132 | -3.110 | -3.184 | -3.225 |

(continued)

| | Overvoltage (V) | | | | |
|---|---|---|---|---|---|
| 400 mA/cm$^2$ | CO$_2$ conversion rate (%) | 35.99 | 32.55 | 33.99 | 35.67 |
| | CO Faraday efficiency (%) | 93.03 | 81.32 | 88.33 | 92.69 |
| | H$_2$ Faraday efficiency (%) | 0.20 | 7.34 | 1.19 | 0.57 |
| | Overvoltage (V) | -3.249 | -3.279 | -3.310 | -3.365 |
| 500 mA/cm$^2$ | CO$_2$ conversion rate (%) | 43.56 | 36.09 | 37.06 | 39.84 |
| | CO Faraday efficiency (%) | 90.07 | 72.13 | 77.04 | 92.83 |
| | H$_2$ Faraday efficiency (%) | 1.47 | 12.85 | 5.50 | 3.28 |
| | Overvoltage (V) | -3.400 | -3.412 | -3.434 | -3.553 |

[Table 2]

| Classification | Performance | Comparative Example 1 | Comparative Example 2 | Comparative Example 3 | Comparative Example 4 |
|---|---|---|---|---|---|
| 100 mA/cm$^2$ | CO$_2$ conversion rate (%) | 9.57 | 9.28 | 8.98 | 8.50 |
| | CO Faraday efficiency (%) | 103.87 | 96.97 | 95.90 | 91.76 |
| | H$_2$ Faraday efficiency (%) | 0.22 | 10.31 | 2.83 | 10.59 |
| | Overvoltage (V) | -2.806 | -2.918 | -3.062 | -3.015 |
| 200 mA/cm$^2$ | CO$_2$ conversion rate (%) | 18.36 | 18.07 | 11.01 | 14.46 |
| | CO Faraday efficiency (%) | 99.64 | 94.42 | 58.79 | 78.05 |
| | H$_2$ Faraday efficiency (%) | 0.21 | 5.23 | 29.12 | 12.64 |
| | Overvoltage (V) | -3.016 | -3.205 | -3.406 | -3.420 |
| 300 mA/cm$^2$ | CO$_2$ conversion rate (%) | 26.55 | 26.53 | 6.96 | 15.47 |
| | CO Faraday efficiency (%) | 96.06 | 92.44 | 24.77 | 55.69 |
| | H$_2$ Faraday efficiency (%) | 0.24 | 2.89 | 59.27 | 33.11 |
| | Overvoltage (V) | -3.152 | -3.410 | -3.587 | -3.588 |
| 400 mA/cm$^2$ | CO$_2$ conversion rate (%) | 34.15 | 34.43 | 3.44 | 13.52 |
| | CO Faraday efficiency (%) | 92.67 | 89.97 | 9.18 | 36.49 |
| | H$_2$ Faraday efficiency (%) | 0.49 | 1.97 | 77.92 | 57.50 |
| | Overvoltage (V) | -3.286 | -3.583 | -3.720 | -3.651 |
| 500 mA/cm$^2$ | CO$_2$ conversion rate (%) | 39.57 | 34.41 | - | - |
| | CO Faraday efficiency (%) | 85.90 | 71.94 | - | - |
| | H$_2$ Faraday efficiency (%) | 5.04 | 13.75 | - | - |
| | Overvoltage (V) | -3.439 | -3.839 | - | - |

[Table 3]

| Classification | Performance | Comparative Example 5 | Comparative Example 6 |
|---|---|---|---|
| 100 mA/cm$^2$ | CO$_2$ conversion rate (%) | 9.49 | 9.43 |
| | CO Faraday efficiency (%) | 99.78 | 96.39 |
| | H$_2$ Faraday efficiency (%) | 0.58 | 2.60 |
| | Overvoltage (V) | -2.964 | -2.960 |

(continued)

| Classification | Performance | Comparative Example 5 | Comparative Example 6 |
|---|---|---|---|
| 200 mA/cm$^2$ | $CO_2$ conversion rate (%) | 18.10 | 18.28 |
| | CO Faraday efficiency (%) | 95.12 | 93.45 |
| | $H_2$ Faraday efficiency (%) | 1.05 | 4.20 |
| | Overvoltage (V) | -3.165 | -3.291 |
| 300 mA/cm$^2$ | $CO_2$ conversion rate (%) | 26.24 | 26.30 |
| | CO Faraday efficiency (%) | 91.93 | 89.62 |
| | $H_2$ Faraday efficiency (%) | 1.39 | 4.99 |
| | Overvoltage (V) | -3.338 | -3.459 |
| 400 mA/cm$^2$ | $CO_2$ conversion rate (%) | 32.96 | 34.62 |
| | CO Faraday efficiency (%) | 86.61 | 88.47 |
| | $H_2$ Faraday efficiency (%) | 2.92 | 4.98 |
| | Overvoltage (V) | -3.507 | -3.594 |
| 500 mA/cm$^2$ | $CO_2$ conversion rate (%) | 19.10 | 34.58 |
| | CO Faraday efficiency (%) | 40.16 | 70.70 |
| | $H_2$ Faraday efficiency (%) | 39.43 | 14.79 |
| | Overvoltage (V) | -3.780 | -3.768 |

Referring to Table 1 to Table 3 above, it can be seen that compared to Comparative Example 1 in which carbon black was not added, the electrochemical cell using the electrode catalyst of each of Examples 1 to 4 has low overvoltage particularly at a high current density of 500 mA/cm$^2$, from which it can be confirmed that the electrode catalyst of the present invention includes carbon black, thereby having sufficient pores formed in an electrode catalyst layer, and as a result, carbon dioxide smoothly moves in the electrode catalyst layer, thereby lowering the overvoltage at a high current. In addition, it can be confirmed that in the case of Example 1, a flooding phenomenon occurring at a high current may also be mitigated due to the hydrophobicity of the carbon black, resulting in suppressing a hydrogen generation reaction, and as a result, the hydrogen Faraday efficiency may also be lowered.

Meanwhile, compared to Examples 1 to 3, in the case of Comparative Examples 2 to 4 in which carbon black was added but the specific surface area of the carbon black was greater than 750 m$^2$/g, the carbon dioxide conversion rate and the carbon monoxide Faraday efficiency were low at most current densities, and the hydrogen Faraday efficiency and the overvoltage were high. In addition, compared to Comparative Example 1 in which carbon black was not added, in the case of Comparative Examples 2 to 4, the carbon dioxide conversion rate and the carbon monoxide Faraday efficiency were low and the hydrogen Faraday efficiency and the overvoltage were high, and particularly, the electrochemical cells using the electrode catalysts of Comparative Examples 3 and 4 had performance deterioration to an extent it was impossible to drive the electrochemical cells at the highest current density of 500 mA/cm$^2$, and had excessively high overvoltage, so that the carbon dioxide conversion rate and there Faraday efficiency could not be measured due to the limitations of a power supply. From the above, it has been confirmed that if carbon black having a large specific surface area is added, the density of an electrode catalyst layer decreases, thereby increasing resistance, and as a result, the overvoltage significantly increases, thereby excessively promoting a hydrogen generation reaction, which may significantly reduce electrode performance.

In addition, it has been confirmed that in the case of Comparative Example 1 and Comparative Example 5 in which carbon black having a specific surface area of 100 m$^2$/g to 750 m$^2$/g was used, but the content of the carbon black was less than the ranges of the present invention, a flooding phenomenon increased due to the low hydrophobicity of the electrode catalyst, and as a result, the electrode performance was low, wherein the conversion rate of carbon dioxide was low at a high current, the overvoltage was high, the Faraday efficiency of hydrogen was also high, or the like, compared to Example 1. In addition, in the case of Comparative Example 6 in which the content of carbon black was greater than the ranges of the present invention, it can be confirmed that the content per unit area of silver nanoparticles, which is a catalyst of a carbon dioxide reduction reaction, was relatively lowered, so that the conversion rate of carbon dioxide was low compared to Example 1.

From the above results, it has been confirmed that in an electrode catalyst of the present invention, a carbon dioxide gas may smoothly move by means of pores formed by carbon black in an electrode catalyst layer, and a flooding phenomenon is also mitigated due to the hydrophobicity of the carbon black, so that the carbon dioxide conversion rate and the carbon monoxide Faraday efficiency in an electrochemical cell including the electrode catalyst may be improved, and the hydrogen Faraday efficiency and the overvoltage may be lowered.

## Claims

1. An electrode catalyst comprising: metal nanoparticles; and carbon black, wherein:

   the carbon black has a specific surface area of 100 $m^2/g$ to 750 $m^2/g$; and
   the carbon black has a content of 35 parts by weight to 350 parts by weight based on 100 parts by weight of the metal nanoparticles.

2. The electrode catalyst of claim 1, wherein the carbon black has a specific resistance of 1.5 $\Omega \cdot$cm or less.

3. The electrode catalyst of claim 1, wherein the metal nanoparticles have an average diameter of 100 nm or less.

4. The electrode catalyst of claim 1, wherein the metal nanoparticles comprise one or more elements selected from the group consisting of Ag, Au, Zn, In, Cu, Ni, Pt, Pd, Ti, Fe, Ga, and Sn.

5. The electrode catalyst of claim 1, wherein the electrode catalyst comprises a cationic ionomer or an anionic ionomer.

6. The electrode catalyst of claim 5, wherein the cationic ionomer or the anionic ionomer has a content of 0.1 parts by weight to 20 parts by weight based on 100 parts by weight of the metal nanoparticles.

7. A cathode comprising:

   an electrode catalyst layer; and a gas diffusion layer,
   wherein:

   the electrode catalyst layer includes the electrode catalyst of claim 1; and
   the electrode catalyst layer is stacked on at least one surface of the gas diffusion layer.

8. The cathode of claim 7, wherein the content per unit area of the metal nanoparticles in the electrode catalyst layer is 0.5 $mg/cm^2$ to 1.5 $mg/cm^2$.

9. A method for preparing a cathode, the method comprising:

   (S1) preparing an electrode catalyst composition by mixing metal nanoparticles, carbon black, and a solvent; and
   (S2) coating the electrode catalyst composition prepared in the step (S1) on a gas diffusion layer,
   wherein:

   the carbon black in the step (S1) has a specific surface area of 100 $m^2/g$ to 750 $m^2/g$; and
   the content of the carbon black in the step (S1) is 35 parts by weight to 350 parts by weight based on 100 parts by weight of the metal nanoparticles.

10. An electrochemical cell comprising the cathode of claim 7; an anode; and a separator disposed between the cathode and the anode.

## INTERNATIONAL SEARCH REPORT

| International application No. |
|---|
| **PCT/KR2024/010124** |

| A. | CLASSIFICATION OF SUBJECT MATTER |
|---|---|

**B01J 21/18**(2006.01)i; **B01J 23/50**(2006.01)i; **B01J 35/40**(2024.01)i; **B01J 37/04**(2006.01)i; **C25B 1/01**(2021.01)i; **C25B 11/081**(2021.01)i; **H01M 4/96**(2006.01)i; **H01M 4/90**(2006.01)i; **H01M 8/1004**(2016.01)i; **H01M 8/10**(2006.01)i

According to International Patent Classification (IPC) or to both national classification and IPC

| B. | FIELDS SEARCHED |
|---|---|

Minimum documentation searched (classification system followed by classification symbols)

B01J 21/18(2006.01); B01J 23/44(2006.01); B01J 37/02(2006.01); B01J 37/04(2006.01); H01M 4/88(2006.01); H01M 4/92(2006.01); H01M 8/10(2006.01); H01M 8/1004(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 촉매(catalyst), 이오노머(ionomer), 금속 나노 입자(metal nanoparticle), 카본 블랙(carbon black)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2002-0092996 A (CABOT CORPORATION) 12 December 2002 (2002-12-12)<br>See paragraphs [0015]-[0464]; claims 2, 4 and 41; tables 2 and 20; sample PPC056126A; and figures 12 and 17. | 1-4,7-10 |
| Y | | 5-6 |
| Y | KR 10-2010-0003780 A (HANWHA CHEMICAL CORPORATION) 12 January 2010 (2010-01-12)<br>See claim 14. | 5-6 |
| A | KR 10-1373092 B1 (SAMSUNG SDI CO., LTD.) 13 March 2014 (2014-03-13)<br>See claims 1, 3 and 4. | 1-10 |
| A | KR 10-1992783 B1 (KOREA ADVANCED INSTITUTE OF SCIENCE AND TECHNOLOGY) 26 June 2019 (2019-06-26)<br>See claims 1, 4 and 12. | 1-10 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 October 2024** | **27 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/010124** |

### C. DOCUMENTS CONSIDERED TO BE RELEVANT

| Category* | Citation of document, with indication, where appropriate, of the relevant passages | Relevant to claim No. |
| --- | --- | --- |
| A | US 2018-0001305 A1 (N.E. CHEMCAT CORPORATION) 04 January 2018 (2018-01-04) <br> See claims 1-6. | 1-10 |

Form PCT/ISA/210 (second sheet) (July 2022)

## INTERNATIONAL SEARCH REPORT
### Information on patent family members

International application No.

**PCT/KR2024/010124**

| Patent document cited in search report | | | Publication date (day/month/year) | Patent family member(s) | | | Publication date (day/month/year) |
|---|---|---|---|---|---|---|---|
| KR | 10-2002-0092996 | A | 12 December 2002 | EP | 1268054 | A1 | 02 January 2003 |
| | | | | EP | 1268054 | A4 | 09 July 2003 |
| | | | | EP | 1268054 | B1 | 05 December 2012 |
| | | | | JP | 2003-527735 | A | 16 September 2003 |
| | | | | JP | 4097944 | B2 | 11 June 2008 |
| | | | | KR | 10-0797125 | B1 | 22 January 2008 |
| | | | | US | 2003-0049517 | A1 | 13 March 2003 |
| | | | | US | 2003-0054218 | A1 | 20 March 2003 |
| | | | | US | 2006-0247122 | A1 | 02 November 2006 |
| | | | | US | 6753108 | B1 | 22 June 2004 |
| | | | | US | 6991754 | B2 | 31 January 2006 |
| | | | | US | 7087341 | B2 | 08 August 2006 |
| | | | | US | 7722687 | B2 | 25 May 2010 |
| | | | | WO | 01-70392 | A1 | 27 September 2001 |
| KR | 10-2010-0003780 | A | 12 January 2010 | KR | 10-0981283 | B1 | 10 September 2010 |
| KR | 10-1373092 | B1 | 13 March 2014 | KR | 10-2011-0111745 | A | 12 October 2011 |
| | | | | US | 2011-0244363 | A1 | 06 October 2011 |
| | | | | US | 8597853 | B2 | 03 December 2013 |
| KR | 10-1992783 | B1 | 26 June 2019 | KR | 10-2018-0109231 | A | 08 October 2018 |
| US | 2018-0001305 | A1 | 04 January 2018 | CN | 107210448 | A | 26 September 2017 |
| | | | | CN | 107210448 | B | 19 April 2019 |
| | | | | EP | 3240070 | A1 | 01 November 2017 |
| | | | | EP | 3240070 | A4 | 03 January 2018 |
| | | | | EP | 3240070 | B1 | 06 February 2019 |
| | | | | JP | 2017-059530 | A | 23 March 2017 |
| | | | | JP | 6133483 | B2 | 24 May 2017 |
| | | | | KR | 10-1849154 | B1 | 16 April 2018 |
| | | | | KR | 10-2017-0085135 | A | 21 July 2017 |
| | | | | US | 10115992 | B2 | 30 October 2018 |
| | | | | US | 2017-0331135 | A1 | 16 November 2017 |
| | | | | WO | 2017-047465 | A1 | 23 March 2017 |

Form PCT/ISA/210 (patent family annex) (July 2022)

**EP 4 717 353 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230091260